# EUROPEAN PATENT SPECIFICATION

(11) **EP 4 155 072 B1**
(45) Date of publication and mention of the grant of the patent: **19.08.2026**
(21) Application number: 22196937.1
(22) Date of filing: 21.09.2022
(51) Int. Cl.: B32B 5/26, B32B 5/08, B32B 7/02, B32B 7/027

(54) **COMPOSITE MATERIAL WITH MOLTEN POLYMER BARRIER EFFECT AND WITH FLAME-RETARDANT PROPERTIES, AND METHOD FOR MAKING SUCH A COMPOSITE MATERIAL**
VERBUNDWERKSTOFF MIT SCHMELZPOLYMER-SPERRWIRKUNG UND MIT FLAMMHEMMENDEN EIGENSCHAFTEN SOWIE VERFAHREN ZUR HERSTELLUNG EINES SOLCHEN VERBUNDWERKSTOFFS
MATÉRIAU COMPOSITE À EFFET BARRIÈRE POLYMÈRE FONDU ET À PROPRIÉTÉS IGNIFUGES, ET PROCÉDÉ DE FABRICATION D'UN TEL MATÉRIAU COMPOSITE

(30) Priority: 24.09.2021 IT 202100024572
(43) Date of publication of application: 29.03.2023
(73) Proprietor: O.R.V. Manufacturing S.p.A., 35010 Carmignano di Brenta, (PD) (IT)
(72) Inventor: BELTRAME, Francesca, I-35010 Carmignano di Brenta, PADOVA (IT); MOCELLIN, Paolo, I-35010 Carmignano di Brenta, PADOVA (IT)
(74) Representative: Zanettin, Gianluigi

(56) References cited:
- WO-A1-2020/100067
- WO-A1-2020/245735
- JP-A- 2014 224 648

## Description

### Field of application

The present invention relates to a composite material with a molten polymer barrier effect and with flame-retardant properties and to a method for making such a composite material.

Advantageously, the composite material according to the present invention combines properties of heat resistance and a molten polymer barrier effect with a surprisingly high sound absorption capacity.

The composite material according to the present invention also exhibits characteristics of improved molten polymer barrier effect compared to existing products on the market, while also having excellent sound absorption characteristics.

Thus, the composite material according to the invention is a sound-absorbing, heat-insulating, non-flammable, moldable material that may be used in various applications where parts having thermal and sound absorption characteristics are required to be made by injection molding of plastics material.

In particular, the composite material according to the present invention may be used for the production of automotive parts by plastics material injection molding processes. In particular, the composite material according to the invention may be used in car interior parts, engine compartments, wheel arches, lower engine compartments, underbodies, or may even be used for civil engineering or for building materials.

Thus, the composite material of the present invention is suitable for satisfying plastics material molding applications in an innovative way:
- the molded parts may be brought into contact with components that reach high temperatures because they are thermally insulated by the special fibers used (oxidized polyacrylonitrile), preventing thermal degradation;
- the molded parts have the ability to acoustically attenuate/absorb any noise produced by the various engine components.

More specifically, the applications for which the composite material according to the invention is particularly suitable are therefore molding of plastics components for engine compartment or body linings of cars or other machinery, even where insulation of complex geometries is required. In particular, in the engine area it is an excellent thermal barrier and sound absorber, preventing any possible fires in the event of overheating.

### Prior art

In the automotive industry, the use of non-woven fabrics has been widespread for many years in response to numerous applications. In order to provide the various characteristics needed for the specific applications of non-woven fabrics, their properties are being continuously improved.

One of the known applications is the use of very homogeneous, thin, compact, and low-basis-weight non-woven fabrics which, when coupled with the visible fabrics inside the passenger compartment (e.g., overhead linings, headliners and pillars, etc.), allow the external aesthetic part to be protected from the passage of molten polymer (e.g., polypropylene) during the injection molding of the components ("barrier" effect).

The "barrier" effect of the non-woven fabrics to the passage of molten polymer, while essential in these processes, does not allow them to be used individually in molding processes of components for the interior of the engine compartment/lower engine compartment/underbody because they would not be able to achieve the performance necessarily required for these areas of the car, namely fire resistance and heat resistance.

One solution currently known to combine the two requirements of heat resistance and molten polymer barrier effect is to use non-woven fabrics containing oxidized polyacrylonitrile fibers (henceforth oxidized PAN fibers). These are fibers obtained by the carbon fiber manufacturing process from precursors, such as polyacrylonitrile (PAN).

Oxidized polyacrylonitrile (PAN) fibers, which are thermally stabilized due to their unique chemical structure, are known not to burn, melt, soften or drip. With an LOI (limiting oxygen index) of 45 to 55%, oxidized PAN fibers are far superior to other organic fibers and have a high flammability rating.

In addition, the special oxidized fibers mixed with other types of fibers in different percentages provide a non-woven fabric having high thermal barrier capacities.

International application WO2020245735A1, relating to non-flammable thermoformable products with thermal insulation capacities, also points out that a thermoplastic polymer layer (e.g., polyester copolymers, polyethylene, etc.) may be deposited on these oxidized PAN fiber-based non-woven fabrics in the form of powder or by coating; this polymer layer acts as a barrier layer, limiting the passage of molten material used for the molding process.

This type of material, although it provides a high resistance to fire and heat, does not, however, guarantee an optimal barrier effect during the molding step: in fact, the distribution of the thermoplastic material is not completely homogeneous and, due to the very nature of the powder or coating system, may leave some points uncovered where the passage of the molten polymer is defined, generating irregularities and defects during the manufacture of the part.

Encapsulation of the engine area, as well as that of other parts of the car, turns out to be necessary to ensure not only high fire resistance and effective heat retention but also significant noise reduction.

The need to develop products that exhibit both acoustic and thermal performance has led to a search for composite materials that may combine the characteristics of different types of products.

A material that acts as a sound absorber must properly adhere to the car part, avoiding leaving uncovered areas where acoustic performance becomes insufficient.

It is well known that polyurethane foams allow proper adhesion to the part during the molding step; moreover, normally combined with synthetic resins (such as classic phenolic or melamine resins), they create a barrier effect on the surface of the materials. Foams, however, have low sound insulation and generate toxic gases in case of fire.

In the automotive industry in particular, but also in other sectors, there is therefore a great need, which hitherto remained substantially unmet, for a composite material that combines high properties of heat resistance and barrier effect during the molding step with high sound absorption capacity.

### Disclosure of the invention

Therefore, the main purpose of the present invention is to eliminate all or part of the drawbacks of the above-mentioned known technique by making available a composite material with a molten polymer barrier effect and flame-retardant properties that exhibits high sound absorption capacity.

A further purpose of the present invention is to make available a composite material with a molten polymer barrier effect and with flame-retardant properties that allows improving the barrier effect to the passage of plastics material.

A further purpose of the present invention is to provide a composite material with a molten polymer barrier effect and with flame-retardant properties that is easy to manufacture.

### Brief description of the drawings

- figures 1 to 10 show, in graph form, the measurement and sound absorption test results in different samples of the composite material according to the invention;
- figure 11 shows a schematic representation of the structure of the composite material in accordance with a first embodiment of the invention, in which a first layer of NWF and a barrier layer of NWF are overlapped on one another but not solidarized;
- figure 12 shows a schematic representation of the structure of the composite material in accordance with a second alternative embodiment of the invention, in which a first layer of NWF and a barrier layer of NWF are overlapped on one another and solidarized by islands of binder resin (not depicted to scale for illustrative reasons) interposed between the two layers; the free space between the two layers has been shown only to allow for graphical representation of the islands and does not correspond to a gap between the two layers);
- figure 13 shows a schematic representation of the structure of the composite material in accordance with a third alternative embodiment of the invention, in which a first layer of NWF and a barrier layer of NWF are overlapped on one another and solidarized by bridge structures between the fibers of the two layers consisting of bicomponent fibers (depicted schematically and not to scale for illustrative reasons; the free space between the two layers has been shown only to allow for graphical representation of the bridge structures and does not correspond to a gap between the two layers); and

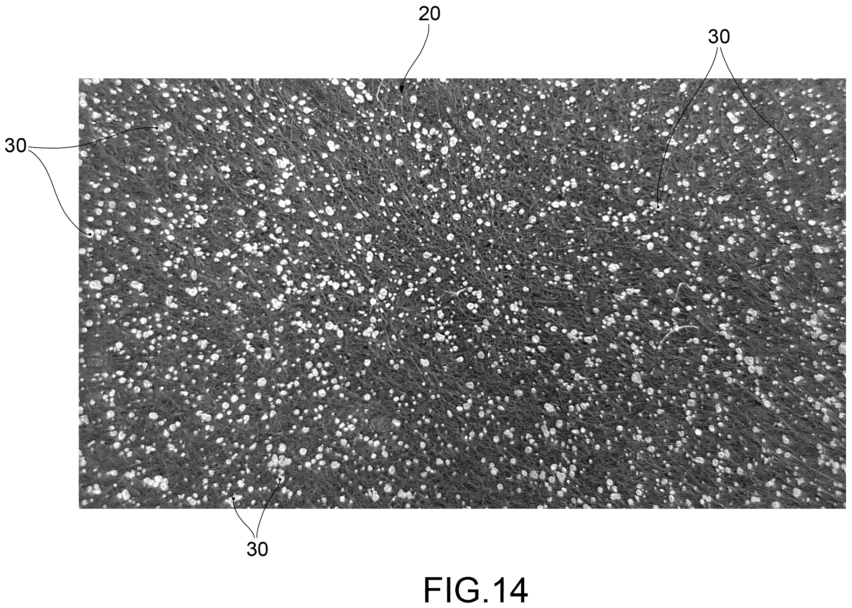

- figure 14 shows a photograph of an NWF barrier layer on which powdered binder resin was deposited by scattering dispenser.

### Detailed description

The composite material with a molten polymer barrier effect and with flame-retardant properties according to the invention is defined in claim 1 and has been indicated overall by 1 in the attached figures.

In accordance with the invention, the composite material 1 comprises a first layer 10 of non-woven fabric (NWF).

In turn, such first layer 10 made of NWF comprises a percentage by weight of oxidized polyacrylonitrile (oxidized PAN) fibers equal to or greater than 40%. The remaining percentage by weight consists of other synthetic fibers.

The first layer 10 confers flame-retardant properties to the composite material 1. In fact, due to the presence of at least 40% by weight of oxidized polyacrylonitrile (oxidized PAN) fibers (which have already undergone a controlled heat treatment that prevents their further deterioration when exposed to major heat sources), the first layer 10 exhibits flame-retardant properties and resistance to thermal wear.

The other synthetic fibers of the first layer 10 made of NWF may be selected from the group consisting of polyethylene terephthalate (PET) fibers, polybutylene terephthalate (PBT) fibers, polyethylene naphthalate (PEN) fibers, polycyclohexylenedimethylene terephthalate (PCT) fibers, polytrimethylene terephthalate (PTT) fibers, polytrimethylene naphthalate (PTN) fibers, and polypropylene (PP) fibers. Preferably, the synthetic fibers of said first layer 10 are polyethylene terephthalate (PET) fibers.

Advantageously, the synthetic fibers of said first layer 10 may further comprise bicomponent fibers.

Bicomponent fibers are defined as fibers consisting of two polymers having different melting temperatures.

Bicomponent fibers may have different cross-sections: in the form of adjacent segments (side-by-side); in the form of concentric layers (core-sheath); in the form of fibrils and matrix (island in the sea, segmented). The bicomponent fibers may also be of a different chemical composition (CoPET/PET, PP/PE, PE/PET, etc.). (Russel, S.J. (2007) Handbook of nonwovens, Woodhead Publishing)

Preferably, bicomponent fibers are CoPET/PET core-sheath fibers in which the core is PET (melting T about 255°C) and the casing is CoPET (melting T 110°C).

Preferably, the bicomponent fibers are present with a percentage by weight on the first layer 10 from 20% to 40%. As will be discussed below, the presence of the bicomponent fibers is intended to allow thermobonding between the first layer 10 and the barrier layer 20.

The first layer 10 has a basis weight between 200 g/m2 and 600 g/m2 and a thickness between 1.6 mm and 5 mm.

Also in accordance with the invention, the composite material 1 also comprises a barrier layer 20, overlapping said first layer 10 made of NWF and suitable to counteract the passage of molten polymers through said composite material 1.

As pointed out earlier, from an application point of view, the composite material 1 is therefore intended to be inserted in an injection mold and molded with a polymer. The composite material 1 is to be placed in the mold so that it is the barrier layer 20 that meets the molding polymer melt. In this way, the first layer 10 comprising oxidized PAN fibers is shielded by the barrier layer 20 and is not affected by the molten polymer.

According to the invention, the oxidized polyacrylonitrile (oxidized PAN) fibers of said first layer 10 have a count between 1.5 - 5 dtex, preferably between 1.7 and 2.5 dtex, while the other synthetic fibers of said first layer 10 have a count between 0.8 dtex and 5 dtex.

According to the invention, the barrier layer 20 consists of a second layer of non-woven fabric of hydro-entangled synthetic and/or artificial fibers.

A non-woven fabric of hydro-entangled fibers is itself well known to a person skilled in the art and therefore will not be described in greater detail. It is merely noted that hydro-entanglement is a process of binding fibers by a high-speed/pressure water jet system. An entangled product is synonymous with a spunlace product or a product bonded by water jets (Russel, S.J. (2007) Handbook of nonwovens, Woodhead Publishing).

As mentioned above, the barrier layer 20 is suitable to counteract the passage of molten polymer through said composite material 1. Such a barrier layer 20 thus has the function of a barrier during plastics injection molding processes by preventing the molten polymer from reaching the first layer 10, thus reducing its flame resistance properties.

It has been experimentally verified that non-woven fabrics made with the spunlace (hydro-entanglement) system have shown effective barrier capacity due to their structure that ensures high elongations, and thus adaptability to complex geometric shapes, with low basis weights and low thicknesses, and above all high homogeneity in fiber distribution and surface smoothing.

In addition, due to the structure conferred by the hydro-entanglement process, the barrier layer 20 made of NWT ensures high elongations, and thus adaptability to complex geometric shapes.

According to the invention, the above-mentioned barrier layer 20 made of NWF has:
- a basis weight between 70 g/m2 and 150 g/m2;
- a thickness between 0.4 mm and 1.5 mm; and
- a permeability to air between 200 L/m2s and 2000 L/m2s under a pressure drop of 2 mbar, measured in accordance with ISO 9237.

The composite material 1, resulting from the combination of the first layer 10 made of NWF and the barrier layer 20 made of NWF, has a thickness between 2 mm and 6.5 mm, preferably 3 mm, and a basis weight between 270 g/m2 and 750 g/m2, preferably between 450 g/m2 and 600 g/m2.

It was surprisingly verified that the composite material 1 resulting from the combination of the first layer 10 made of NWF and the barrier layer 20 made of NWF not only exhibits high molten polymer barrier capacities and flame-retardant properties, but also a high sound absorption capacity compared with similar products on the market, made as described in international application WO2020245735. All of this is supported by the experimental tests that will be described below.

Without wishing to be limited to the present explanation, it is hypothesized that the high sound absorption capacity of the composite material 1 results from the synergistic effect between the two layers 10 and 20 made of NWF. In particular, such a high sound absorption capacity of the composite material 1 would seem to result from the combination of:
- the fibrous structure of the first layer 10 made of NWF obtained from the mixture of oxidized PAN fibers with a count between 1.5 - 5 dtex and other synthetic fibers with a count between 0.8 dtex and 5 dtex;
- the fibrous structure of the barrier layer 20 made of hydro-entangled NWF having a permeability to air between 200 L/m2s and 2000 L/m2s under a pressure drop of 2 mbar, measured in accordance with ISO 9237.

A person skilled in the art is able to make the barrier layer 20 in NWF by adjusting the basis weight, thickness and type of fibers along with the setting parameters of the hydro-entanglement machine (pressure and type of water nozzles, temperatures, calendering, etc.). In fact, the process of producing NWF by hydro-entanglement may provide products with different stiffness, elasticity, permeability to air, etc. Therefore, this process is not described in detail.

In accordance with a preferred embodiment of the present invention, the synthetic and/or artificial fibers of said barrier layer 20 have a count between 0.8 dtex and 5 dtex. It has been verified that the selection of this range of fiber count promotes a regularity in the distribution of the fibers, a factor that improves the performance in respect of the barrier effect and sound absorption.

The synthetic and/or artificial fibers of said barrier layer 20 are selected from the group consisting of polyethylene terephthalate (PET) fibers, polybutylene terephthalate (PBT) fibers, polyethylene naphthalate (PEN) fibers, polycyclohexylenedimethylene terephthalate (PCT) fibers, polytrimethylene terephthalate (PTT) fibers, polytrimethylene naphthalate (PTN) fibers, polypropylene (PP) fibers, splittable fibers, and viscose fibers (RY). Preferably, the synthetic fibers of said barrier layer 20 are polyethylene terephthalate (PET) fibers.

Advantageously, the synthetic fibers of said barrier layer 20 may additionally comprise bicomponent fibers.

The bicomponent fibers may have different cross-sections: in the form of adjacent segments (side-by-side); in the form of concentric layers (core-sheath); in the form of fibrils and matrix (island in the sea, segmented). The bicomponent fibers may also be of a different chemical composition (CoPET/PET, PP/PE, PE/PET, etc.). Preferably, the bicomponent fibers are present with a percentage by weight on the barrier layer 20 from 20% to 40%. As will be discussed below, the presence of the bicomponent fibers is intended to allow thermobonding between the first layer 10 and the barrier layer 20.

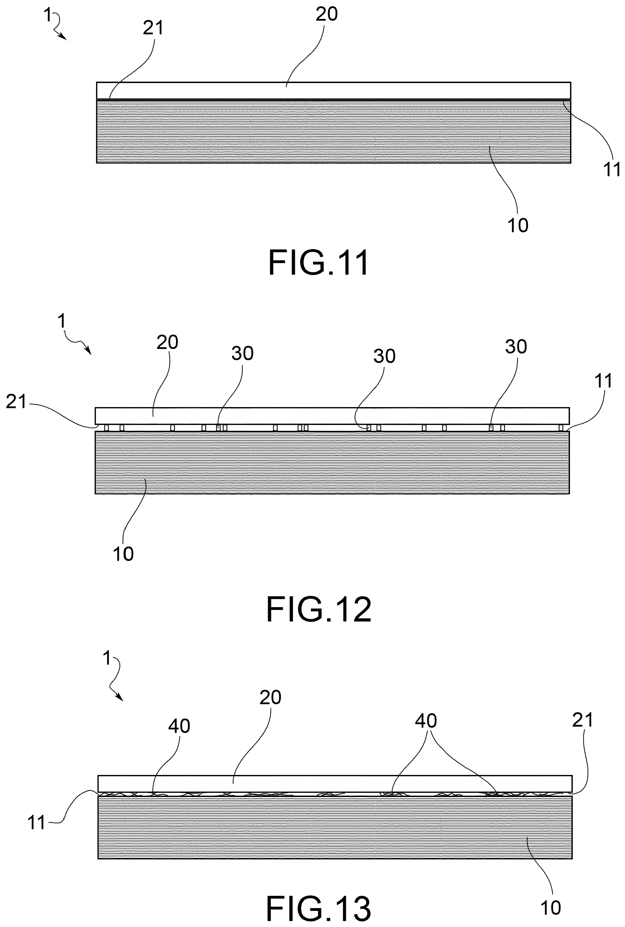

According to a first embodiment of the invention, illustrated schematically in figure 11, the first layer 10 and the barrier layer 20 may be simply overlapped on one another without being coupled/interconnected, i.e., without being solidarized with each other.

Preferably, however, the first layer 10 and the barrier layer 20 are also solidarized with each other in such a way that the two layers are locked together so that the composite material 1 becomes a single body that is more easily machined and handled. However, the solidarization between the two layers 10 and 20 is achieved through a discontinuous interconnection between the respective contact surfaces 11, 21 of the two layers 10, 20. In fact, this avoids the formation, between the two layers 10 and 20, of a continuous separation interface between the two layers, which for the purpose of acoustic performance would isolate the two layers and prevent their synergistic cooperation. A continuous interconnection between the two layers (for example through a layer of adhesive material applied continuously between the two contact surfaces of the two layers) would cause sound waves passing through the first layer 10 to be reflected, thus limiting the contribution in terms of sound absorption made by the barrier layer 20. By contrast, a discontinuous interconnection between the respective contact surfaces of the two layers 10, 20 significantly reduces the reflection effect of sound waves. In fact, it was verified experimentally that the discontinuous interconnection does not affect the sound absorption properties of the composite material 1, thus maintaining a synergistic effect between the two layers.

In accordance with a second embodiment of the invention, illustrated schematically in figure 12, the discontinuous interconnection between the respective contact surfaces 11, 21 of the two layers 10 and 20 is defined by islands 30 of binder resin acting as a bridge between the two layers 10, 20. Thus, there are free zones of passage for sound waves between the two layers 10 and 20 between the islands 30 of thermoplastic resin.

Preferably, such islands 30 of binder resin are obtained:
- by depositing binder resin powder on the contact surface 11 of the first layer 10 and/or on the contact surface 21 of the barrier layer 20 by means of a scattering dispenser;
- by then thermally activating the binder resin powder deposited on the contact surface by applying heat (for example through an IR device);
- after overlapping the two layers, by pressing the two layers together (preferably without heating by means of calendering cylinders), so as to compress the partially molten binder resin powder between the two contact surfaces and thus create said islands 30 of binder resin acting as a bridge between the two layers 10, 20.

Preferably, the islands 30 of binder resin constitute from 3% to 8% by weight of the total weight of the composite material 1. It could be verified that this amount of resin is sufficient to ensure adequate solidarization of the two layers without affecting the sound absorption performance of the composite material 1.

Preferably, the binder resin (and thus the islands formed thereby) is present with a basis weight between 6 g/m2 and 56 g/m2; in particular, the grain size of such resin is in the range of 80 µm to 500 µm.

The binder resin may be co-polyester, polyolefin or epoxy.

In accordance with a third embodiment of the invention, illustrated in figure 13, in the case where at least one of the two layers 10 and 20 comprises bicomponent fibers, the discontinuous interconnection between the respective contact surfaces 11, 21 of the two layers 10 and 20 is obtained by thermobonding and is defined by bridge structures 40 between the fibers of the two layers consisting of thermobonded bicomponent fibers.

The present invention relates to a method for making the composite material with molten polymer barrier effect and with flame-retardant properties according to the invention.

For this reason, the method is described below using the same numerical references used to describe the composite material 1. For the description of the composite material 1, reference is made to the description previously provided for the material 1. In addition, the advantages obtainable by the method according to the invention are the same as those described in conjunction with the composite material 1. For simplicity of disclosure, the advantages of the method according to the invention will not be described again either.

In accordance with a general embodiment of the invention, the method for making a composite material 1 with a molten polymer barrier effect and with flame-retardant properties according to the present invention comprises the following operating steps:
a) producing the first layer 10 of non-woven fabric by carding and needling or hydro-entangling a mixture of synthetic fibers with a count between 0.8 dtex and 5 dtex and oxidized polyacrylonitrile fibers with a count between 1.5 and 5 dtex; the oxidized polyacrylonitrile fibers constituting at least 40% by weight of the first layer 10; the first layer 10 has a basis weight between 200 g/m2 and 600 g/m2 and a thickness between 1.6 mm and 5 mm;
b) producing the barrier layer 20 in non-woven fabric by carding and hydro-entangling synthetic and/or artificial fibers; the barrier layer 20 has a basis weight between 70 g/m2 and 150 g/m2, a thickness between 0.4 mm and 1.5 mm and a permeability to air between 200 L/m2s and 2000 L/m2s under a pressure drop of 2 mbar, measured according to ISO 9237,
c) overlapping the first layer 10 and the barrier layer 20 on each other at respective contact surfaces, so as to obtain said composite material.

The composite material 1 obtained has a thickness between 2 mm and 6.5 mm, preferably 3 mm, and a basis weight between 270 g/m2 and 750 g/m2, preferably between 450 g/m2 and 600 g/m2.

The synthetic fibers of said first layer 10 may be selected from the group consisting of polyethylene terephthalate (PET) fibers, polybutylene terephthalate (PBT) fibers, polyethylene naphthalate (PEN) fibers, polycyclohexylenedimethylene terephthalate (PCT) fibers, polytrimethylene terephthalate (PTT) fibers, polytrimethylene naphthalate (PTN) fibers, and polypropylene (PP) fibers. Preferably the other synthetic fibers in said first layer 10 are polyethylene terephthalate (PET) fibers.

Preferably, the synthetic and/or artificial fibers of said barrier layer 20 have a count between 0.8 dtex and 5 dtex.

Advantageously, the other synthetic fibers of said first layer 10 may additionally comprise bicomponent fibers. Preferably, the bicomponent fibers are present with a percentage by weight on the first layer 10 from 20% to 40%.

The synthetic and/or artificial fibers of said barrier layer 20 are selected from the group consisting of polyethylene terephthalate (PET) fibers, polybutylene terephthalate (PBT) fibers, polyethylene naphthalate (PEN) fibers, polycyclohexylenedimethylene terephthalate (PCT) fibers, polytrimethylene terephthalate (PTT) fibers, polytrimethylene naphthalate (PTN) fibers, polypropylene (PP) fibers, splittable fibers, and viscose fibers (RY). Preferably the synthetic fibers of said barrier layer 20 are polyethylene terephthalate (PET) fibers.

Advantageously, the synthetic and/or artificial fibers of said barrier layer 20 may additionally comprise bicomponent fibers. Preferably, the bicomponent fibers are present with a percentage by weight on the barrier layer 20 from 20% to 40%.

Preferably, the method comprises a step (d) to solidarize the first layer 10 and barrier layer 20 with each other so as to realize a discontinuous interconnection between the respective contact surfaces 11, 21 of the two layers 10, 20.

In accordance with a preferred embodiment, the discontinuous interconnection between the respective contact surfaces of the two layers 10 and 20 is defined by islands 30 of binder resin acting as a bridge between the two layers 10, 20.

Specifically, the above-mentioned solidarizing step d) comprises the following sub-steps conducted prior to the overlapping step (c):
d1) depositing binder resin powder on the contact surface 11 of the first layer 10 and/or on the contact surface 21 of the barrier layer 20;
d2) thermally activating the binder resin powder deposited on the contact surface by applying heat.

The above-mentioned solidarizing step (d) further comprises the following sub-step conducted after the overlapping step (c):
d3) pressing the two overlapped layers 10, 20 together, preferably without heating by means of calendering cylinders, so as to compress the partially activated binder resin powder between the two contact surfaces 11, 21 and thus create said islands 30 of binder resin acting as a bridge between the two layers 10, 20.

Preferably, the binder resin constitutes from 3% to 8% by weight of the total weight of the composite material 1.

Preferably, the binder resin (and thus the islands formed thereby) is present with a basis weight between 6 g/m2 and 56 g/m2; in particular, the grain size of such resin is in the range of 80 µm to 500 µm.

The binder resin may be co-polyester, polyolefin or epoxy.

In accordance with a preferred alternative embodiment, in the case in which at least one of the two layers 10 and 20 comprises bicomponent fibers, the discontinuous interconnection between the respective contact surfaces 11, 21 of the two layers 10 and 20 is defined by bridge structures 40 between the fibers of the two layers consisting of thermobonded bicomponent fibers.

In such a case, the aforementioned solidarizing step d) comprises thermobonding the two layers 10 and 20 overlapped on each other by the application of heat so as to partially melt the bicomponent fibers present in at least one of the two layers and thus create bridge structures 40 between the fibers of the two layers.

### COMPARATIVE EXAMPLES

Several samples of the composite material 1 according to the invention were made. All the samples were tested for sound absorption measurement by impedance tube according to ISO 10534-2.

The thickness of the composite material 1 and of the layers that compose it was measured following the ISO 9073 - 2 standard which suggests carrying out the measurement by applying a pressure of 0.5 kPa.

The basis weight of the composite material 1 and of the layers that compose it was measured following the ISO 9073 - 1 standard which suggests carrying out the measurement relative to an area of 500 cm².

All the material samples according to the invention were made by solidarizing together the first layer 10 made of NWF with the barrier layer 20 made of NWF by depositing epoxy/co-polyester resin on the contact surface 21 of the barrier layer 20 in an amount of 15 g/m2 using a scattering dispenser. The resin, once deposited, was thermally activated. The two layers were then overlapped by pressing them together by means of calendering cylinders, operating without heating.

In examples 1 to 5, the composite material samples 1 according to the invention all have the same barrier layer 20, while the characteristics of the first layer 10 have been varied, particularly the basis weight and the thickness.

In examples 6 to 10, the samples of composite material 1 according to the invention all have a first layer 10 having substantially the same characteristics (varying only slightly in thickness), while the characteristics of the barrier layer 20 have been varied, in particular the basis weight, thickness, and fiber composition.

The same test of measuring sound absorption by impedance tube according to ISO 10534-2 was carried out on a sample of a commercially available material with a similar function (hereafter identified as "reference material"), for a comparison of acoustic properties with the composite material according to the invention.

The reference material (made according to the teaching of international application WO2020245735A1) comprises an NWF layer based on oxidized PAN fibers and a continuous film of thermoplastic powder deposited by coating on the oxidized PAN fiber layer. Such material has a thickness of 3 mm and basis weight of 600 g/m2.

### EXAMPLE 1

The characteristics of the sample (prototype) of composite material according to the invention used in example 1 are summarized in Table 1 below:

**Table 1**

| | Basis weight (g/ m²) | Thickness (mm) | Permeability@-2mbar (L/m² s) | Composition |
|---|---|---|---|---|
| Prototype | 565 | 3 | 258 | |
| Made with: | | | | |
| barrier layer (Layer B-1) | 100 | 1 | 1700 | 100% polyester fibers 1.6 dtex |
| | | | | NWF made by carding and hydro-entanglement with spunlace process |
| First layer (Layer A) | 450 | 2 | | 40% oxidized PAN fibers 2 dtex |
| | | | | 60% polyester fibers 1.7 dtex |
| | | | | NWF made by carding and needling |

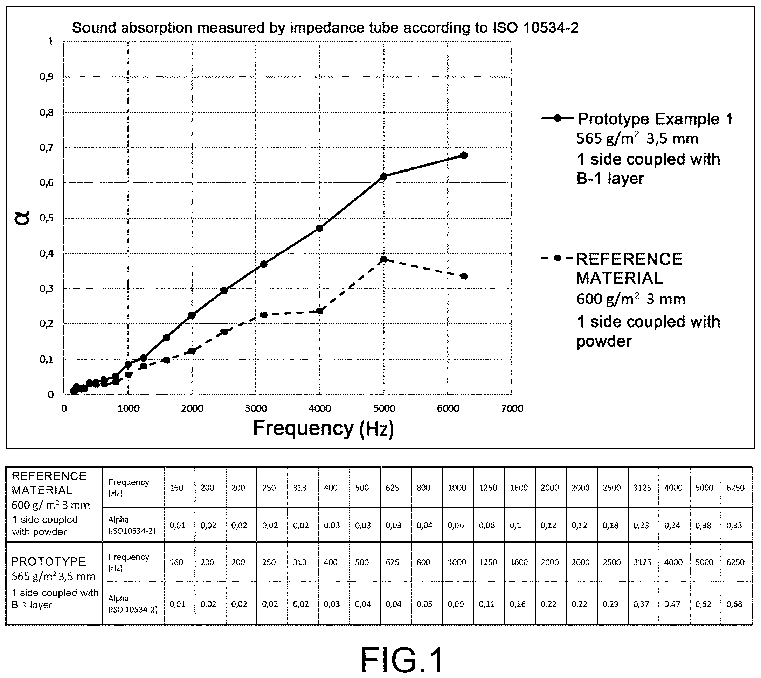

The results of the sound absorption measurement tests are shown in the graph and table in figure 1. The same figure 1 shows the results of the measurement tests on the sample of the reference material.

The sample of composite material 1 according to the invention exhibits markedly improved sound absorption properties compared to the reference material of higher basis weight, a characteristic that, other things being equal, improves acoustic properties.

The improvement in the sound absorption property may be attributed particularly to the presence of the NWF barrier layer 20 (Layer B-1).

### EXAMPLE 2

The characteristics of the sample (prototype) of composite material according to the invention used in Example 2 are summarized in Table 2 below:

**Table 2**

| | Basis weight (g/ m²) | Thickness (mm) | Permeability @-2mbar (L/m² s) | Composition |
|---|---|---|---|---|
| Prototype | 450 | 3.5 | 400 | |
| Made with: | | | | |
| barrier layer (Layer B-1) | 100 | 1 | 1700 | 100% polyester fibers 1.6 dtex |
| | | | | NWF made by carding and hydro-entanglement with spunlace process |
| First layer (Layer A) | 335 | 2.5 | | 40% oxidized PAN fibers 2 dtex |
| | | | | 60% polyester fibers 1.7 dtex |
| | | | | NWF made by carding and needling |

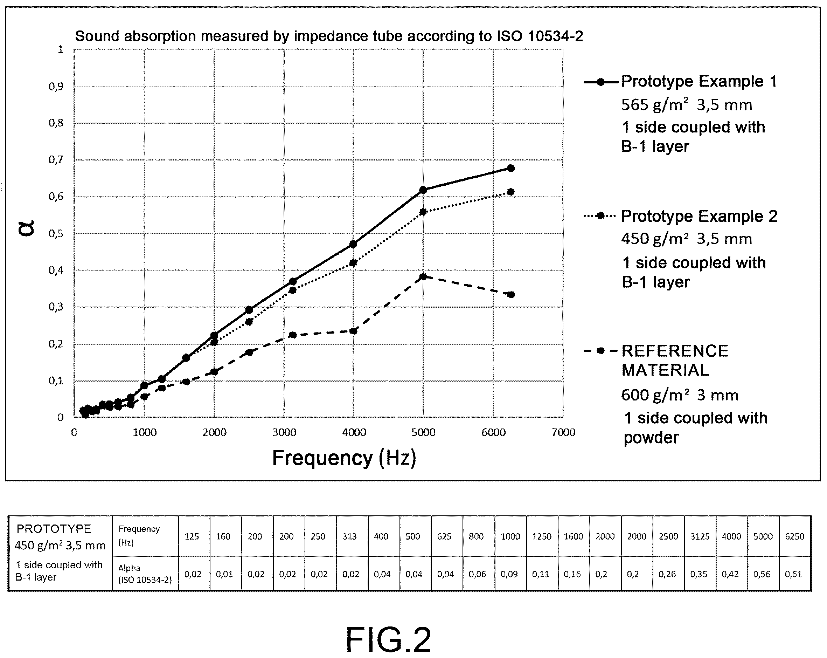

The results of the sound absorption measurement tests are shown in the graph and table in figure 2. The graph in the same figure 2 shows the results of the measurement tests on the sample of the reference material and on the prototype of example 1.

### EXAMPLE 3

The characteristics of the sample (prototype) of composite material according to the invention used in Example 3 are summarized in Table 3 below:

**Table 3**

| | Basis weight (g/ m²) | Thickness (mm) | Permeability@-2mbar (L/m² s) | Composition |
|---|---|---|---|---|
| Prototype | 350 | 3.5 | 550 | |
| Made with: | | | | |
| barrier layer (Layer B-1) | 100 | 1 | 1700 | 100% polyester fibers 1.6 dtex |
| | | | | NWF made by carding and hydro-entanglement with spunlace process |
| First layer (Layer A) | 235 | 2.5 | | 40% oxidized PAN fibers 2 dtex |
| | | | | 60% polyester fibers 1.7 dtex |
| | | | | NWF made by carding and needling |

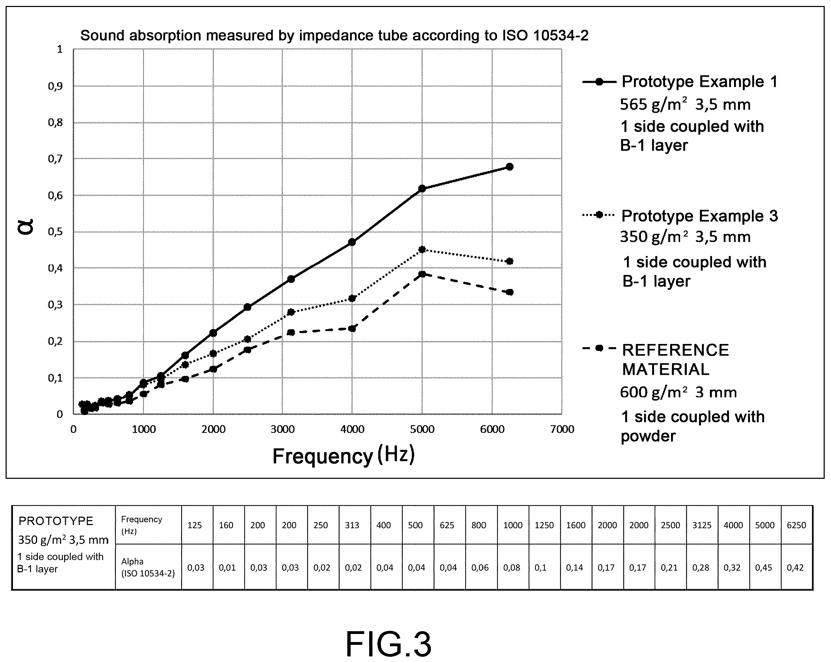

The results of the sound absorption measurement tests are shown in the graph and table in figure 3. The graph in the same figure 3 shows the results of the measurement tests on the sample of the reference material and on the prototype of example 1.

### EXAMPLE 4

The characteristics of the sample (prototype) of composite material according to the invention used in example 4 are summarized in Table 4 below:

**Table 4**

| | Basis weight (g/ m²) | Thickness (mm) | Permeability@-2mbar (L/m² s) | Composition |
|---|---|---|---|---|
| Prototype | 270 | 3 | 750 | |
| Made with: | | | | |
| barrier layer (Layer B-1) | 100 | 1 | 1700 | 100% polyester fibers 1.6 dtex |
| | | | | NWF made by carding and hydro-entanglement with spunlace process |
| First layer (Layer A) | 155 | 2 | | 40% oxidized PAN fibers 2 dtex |
| | | | | 60% polyester fibers 1.7 dtex NWF made by carding and needling |

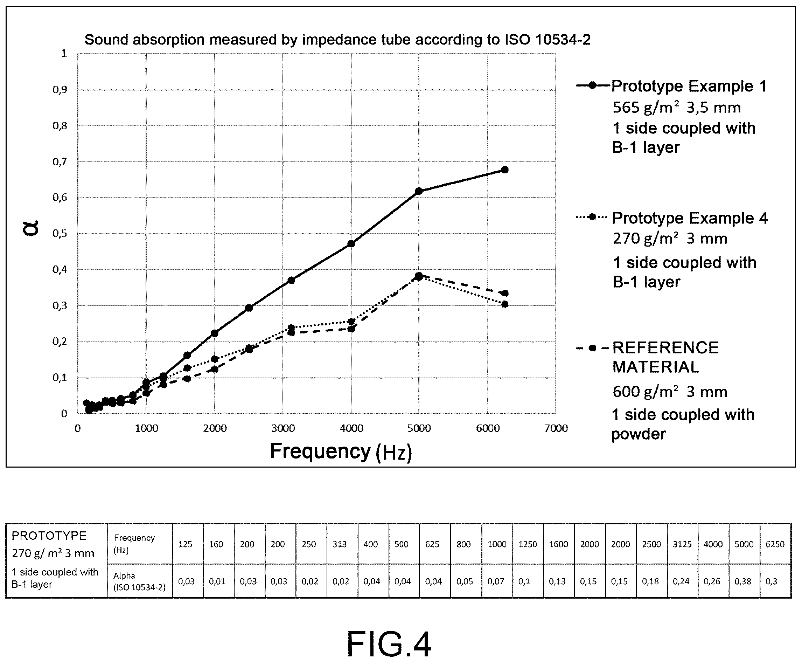

The results of the sound absorption measurement tests are shown in the graph and table in figure 4. The graph in the same figure 4 shows the results of the measurement tests on the sample of the reference material and on the prototype of example 1.

### EXAMPLE 5

The characteristics of the sample (prototype) of composite material according to the invention used in example 5 are summarized in Table 5 below:

**Table 5**

| | Basis weight (g/ m²) | Thickness (mm) | Permeability @-2mbar (L/m² s) | Composition |
|---|---|---|---|---|
| Prototype | 210 | 2 | 917 | |
| Made with: | | | | |
| barrier layer (Layer B-1) | 100 | 1 | 1700 | 100% polyester fibers 1.6 dtex |
| | | | | NWF made by carding and hydro-entanglement with spunlace process |
| First layer (Layer A) | 95 | 1 | | 40% oxidized PAN fibers 2 dtex |
| | | | | 60% polyester fibers 1.7 dtex |
| | | | | NWF made by carding and needling |

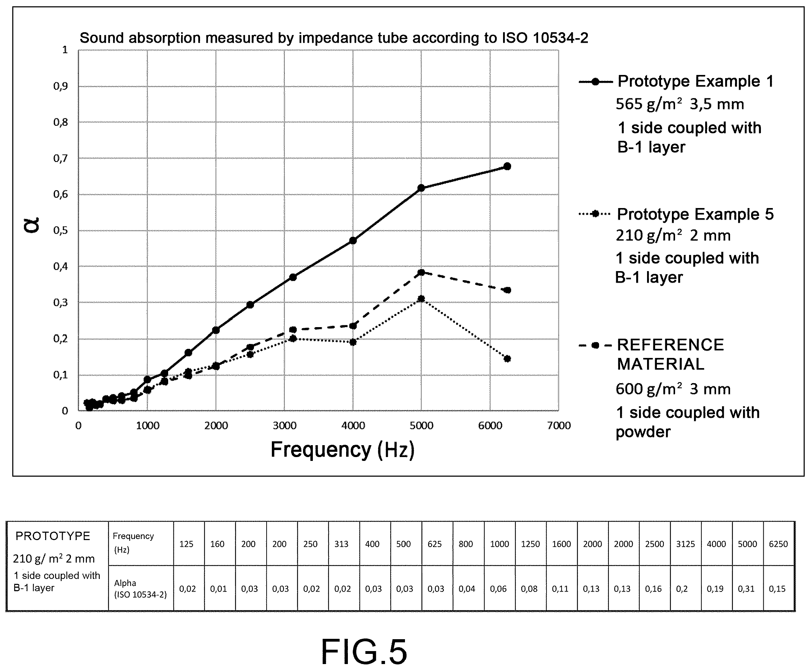

The results of the sound absorption measurement tests are shown in the graph and table in figure 5. The graph in the same figure 5 shows the results of the measurement tests on the sample of the reference material and on the prototype of example 1.

The sound absorption properties of the PROTOTYPES made in examples 1 to 5 show an improvement in sound absorption as the basis weight and thickness increase. The results obtained were also compared with those for the reference material.

The prototype in example 4 having a basis weight 270 g/m2 and thickness 3.0 mm exhibits sound absorption properties comparable with those of the reference material having a basis weight 600 g/m2 and thickness 3 mm. Thus, it may be seen that the addition of barrier layer 20 made of NWF (layer B) to the first layer 20 based on oxidized PAN fibers makes it possible to obtain the same sound absorption properties as compared with the product found on the market (provided with a barrier through the application of a layer of thermoplastic powder), but with said product having double the basis weight. Reducing the basis weight of the products used as plastics injection barriers is one of the requirements constantly pursued and sought after in the market.

### EXAMPLE 6

The characteristics of the sample (prototype) of composite material according to the invention used in example 6 are summarized in Table 6 below:

**Table 6**

| | Basis weight (g/ m²) | Thickness (mm) | Permeability@-2mbar (L/m² s) | Composition |
|---|---|---|---|---|
| Prototype | 350 | 3 | 625 | |
| Made with: | | | | |
| barrier layer (Layer B-1) | 100 | 1 | 1700 | 100% polyester fibers 1.6 dtex |
| | | | | NWF made by carding and hydro-entanglement with spunlace process |
| First layer (Layer A) | 235 | 2 | | 40% oxidized PAN fibers 2 dtex |
| | | | | 60% polyester fibers 1.7 dtex |
| | | | | NWF made by carding and needling |

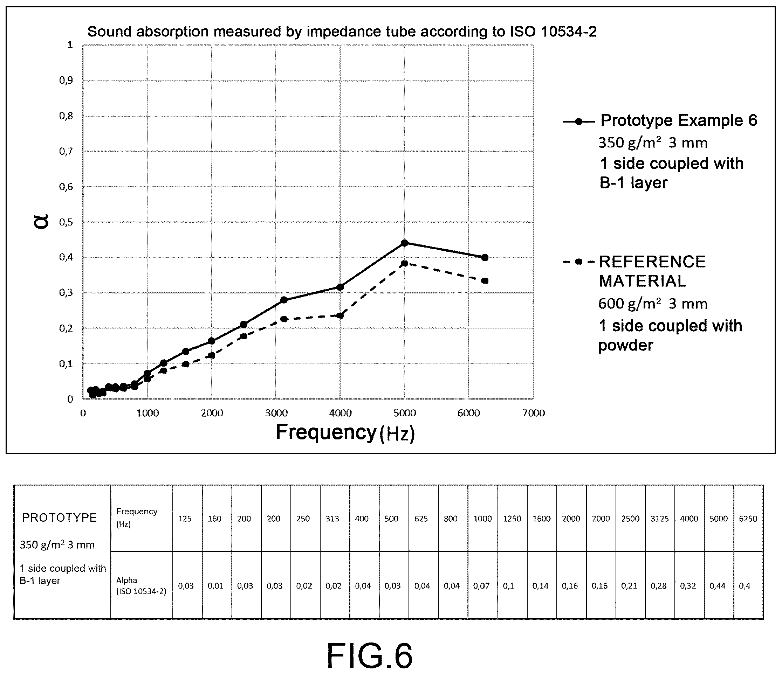

The results of the sound absorption measurement tests are shown in the graph and table in figure 6. The same figure 6 shows the results of the measurement tests on the sample of the reference material.

### EXAMPLE 7

The characteristics of the sample (prototype) of composite material according to the invention used in example 7 are summarized in Table 7 below:

**Table 7**

| | Basis weight (g/ m²) | Thickness (mm) | Permeability@-2mbar (L/m² s) | Composition |
|---|---|---|---|---|
| Prototype | 340 | 3 | 450 | |
| Made with: | | | | |
| barrier layer (Layer B-2) | 90 | 0.6 | 800 | 60% splittable polyester/polyamide fibers 2.2 dtex |
| | | | | 40% polyester fibers 1.3 dtex |
| | | | | NWF made by carding and hydro-entanglement with spunlace process |
| First layer (Layer A) | 235 | 2.4 | | 40% oxidized PAN fibers 2 dtex |
| | | | | 60% polyester fibers 1.7 dtex |
| | | | | NWF made by carding and needling |

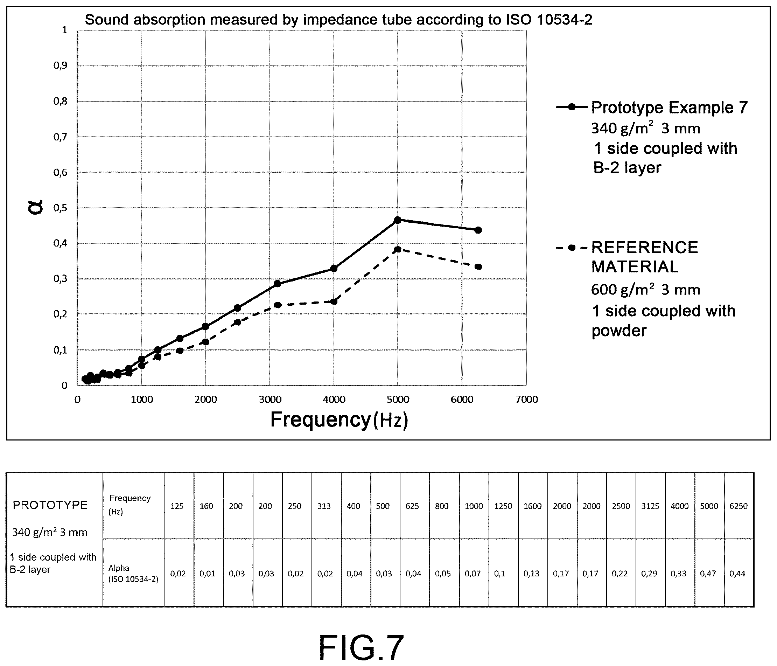

The results of the sound absorption measurement tests are shown in the graph and table in figure 7. The same figure 7 shows the results of the measurement tests on the sample of the reference material.

### EXAMPLE 8

The characteristics of the sample (prototype) of composite material according to the invention used in example 8 are summarized in Table 8 below:

**Table 8**

| | Basis weight (g/ m²) | Thickness (mm) | Permeability@-2mbar (L/m² s) | Composition |
|---|---|---|---|---|
| Prototype | 365 | 3 | 433 | |
| Made with: | | | | |
| barrier layer (Layer B-3) | 115 | 0.75 | 700 | 100% viscose fibers 1.7 dtex |
| | | | | NWF made by carding and hydro-entanglement with spunlace process |
| First layer (Layer A) | 235 | 2.25 | | 40% oxidized PAN fibers 2 dtex |
| | | | | 60% polyester fibers 1.7 dtex |
| | | | | NWF made by carding and needling |

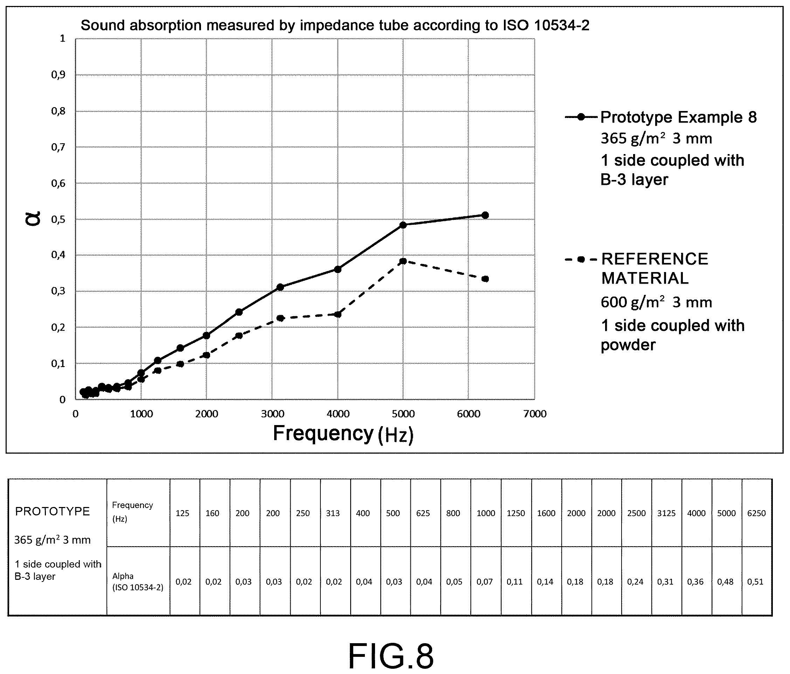

The results of the sound absorption measurement tests are shown in the graph and table in figure 8. The same figure 8 shows the results of the measurement tests on the sample of the reference material.

### EXAMPLE 9

The characteristics of the sample (prototype) of composite material according to the invention used in example 9 are summarized in Table 9 below:

**Table 9**

| | Basis weight (g/ m²) | Thickness (mm) | Permeability@-2mbar (L/m² s) | Composition |
|---|---|---|---|---|
| Prototype | 320 | 3 | 375 | |
| Made with: | | | | |
| barrier layer (Layer B-4) | 70 | 0.6 | 600 | 100% splittable polyester/polyamide fibers 2.2 dtex |
| | | | | NWF made by carding and hydro-entanglement with spunlace process |
| First layer (Layer A) | 235 | 2.4 | | 40% oxidized PAN fibers 2 dtex |
| | | | | 60% polyester fibers 1.7 dtex |
| | | | | NWF made by carding and needling |

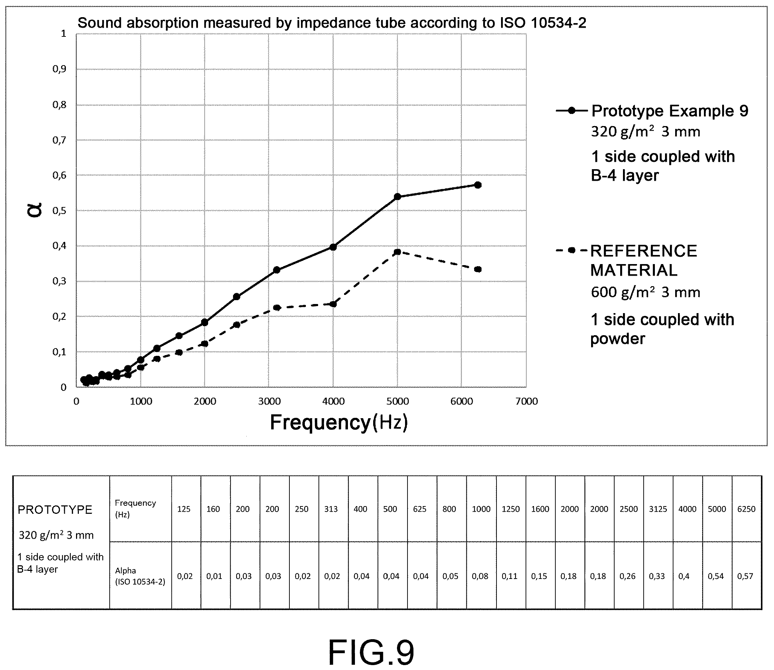

The results of the sound absorption measurement tests are shown in the graph and table in figure 9. The same figure 9 shows the results of the measurement tests on the sample of the reference material.

### EXAMPLE 10

The characteristics of the sample (prototype) of composite material according to the invention used in example 6 are summarized in Table 10 below:

**Table 10**

| | Basis weight (g/ m²) | Thickness (mm) | Permeability@-2mbar (L/m² s) | Composition |
|---|---|---|---|---|
| Prototype | 350 | 3 | 192 | |
| Made with: | | | | |
| barrier layer (Layer B-5) | 100 | 0.8 | 250 | 100% splittable polyester/polyamide fibers 2.2 dtex |
| | | | | NWF made by carding and hydro-entanglement with spunlace process |
| First layer (Layer A) | 235 | 2.2 | | 40% oxidized PAN fibers 2 dtex |
| | | | | 60% polyester fibers 1.7 dtex |
| | | | | NWF made by carding and needling |

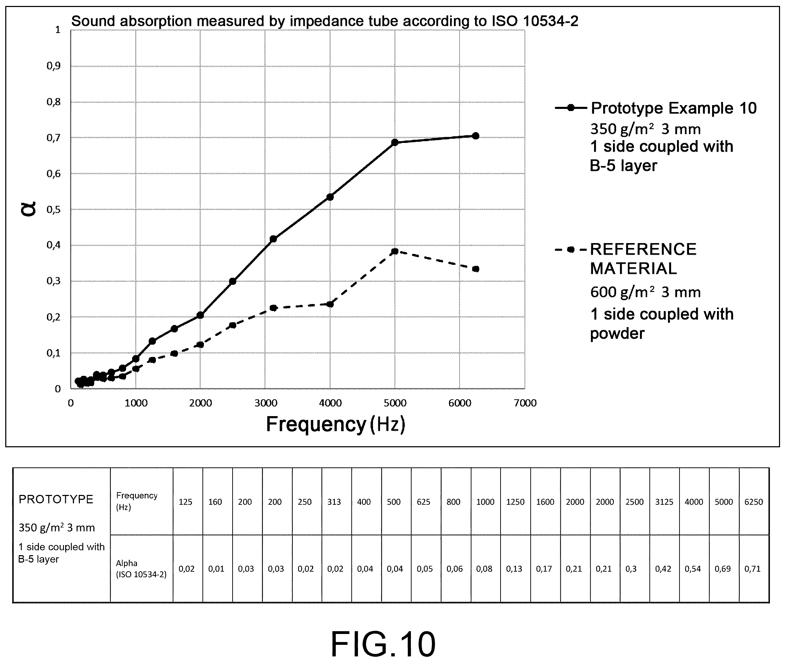

The results of the sound absorption measurement tests are shown in the graph and table in figure 10. The same figure 10 shows the results of the measurement tests on the sample of the reference material.

In examples 6 to 10, prototypes of composite material 1 according to the invention in which the basis weight of the first layer 10 (layer A) was kept constant were tested, combining barrier layers 20 (layers B) made with the same spunlace technology but having different characteristics: basis weight, thickness, permeability and fiber composition.

The various barrier layers 20 (layers B) show different basis weight and permeability characteristics with effective barrier capacity since they may be used depending on the applications to different molding systems. The final thickness of the prototypes was kept constant at 3 mm.

The sound absorption properties of the various prototypes having the same thickness and similar basis weight whilst varying the nature of the coupled barrier layer 20 (layer B), and in particular with different permeability and fiber composition, vary greatly.

It was shown that, as the permeability of the coupled barrier layer 20 (layer B) decreased (progressive decrease from the prototype of example 6 to the prototype of example 10), the sound absorption property improved with other factors being equal.

All of the prototypes tested showed an improvement in sound absorption compared to the reference material, despite having almost half the basis weight, a difference that was maximized in the PROTOTYPE made in example 10.

Table 11 below shows the tensile characteristic data of the composite material 1 according to the invention used in example 1, as well as the tensile characteristic data of the reference material on the market.

**Table 11**

| Feature | Reference standard | Unit of measurement | REFERENCE MATERIAL with powder on one side | Material Example 1 1 side coupled to layer B-1 |
|---|---|---|---|---|
| Basis weight | ISO 9073-1 | g/m2 | 600 | 565 |
| Thickness | ISO 9073-2 | mm | 3 | 3.5 |
| Max load MD | ISO 9073-3 | N/5cm | 267 | 607 |
| Max elongation MD | | % | 57 | 66 |
| Max load CD | | N/5cm | 368 | 786 |
| Max elongation CD | | % | 64 | 74 |
| Permeability -2 mbar | ISO 9237 | l/m2sec | 367 | 258 |

It is observed that the product of the present invention has a much higher tensile strength than the reference material on the market; in addition, the greater elongations ensure better adaptability to the complex shapes in the molding step.

The invention allows numerous advantages to be obtained, which have already been described in part.

The composite material with a molten polymer barrier effect and with flame-retardant properties according to the invention has a high sound absorption capacity.

The composite material with a molten polymer barrier effect and with flame-retardant properties according to the invention makes it possible to improve the barrier effect to the passage of molten plastics material. In fact, compared with a material with similar functions described in WO2020245735A1, in the composite material according to the invention the presence of a barrier layer made of a hydro-entangled non-woven fabric that entirely covers the surface of the oxidized PAN fiber-based layer (with high fire and heat resistance) avoids passage irregularities at the time of injection that might occur instead in a barrier layer obtained by coating of a thermoplastic material.

The composite material with a molten polymer barrier effect and with flame-retardant properties according to the invention also exhibits constant dimensional stability in the molding processes, particularly in the molding processes for automotive components.

In fact, the barrier layer made of hydro-entangled non-woven fabric turns out to be easily deformable and adaptable to even the most complex geometries, significantly increasing the sound absorption properties, a characteristic that is very appreciable in different parts of the car.

Due to being made by hydro-entanglement, the barrier layer maintains the fiber elongation properties in both machine directions with effective performance improvement during the molding process; the barrier layer may be easily adapted to the mold shape while maintaining the structural integrity and barrier properties of the material used for the molding itself.

Thus, the composite material according to the invention is a valuable aid to automotive component manufacturers to increase the efficiency of the one-step injection molding process, reduce quality defects, and potentially save on production costs.

The composite material with molten polymer barrier effect and with flame-retardant properties according to the invention is easy to produce, since it may be made by traditional non-woven fabric production processes.

Compared with a material made in accordance with international application WO 2020/245735 A1 (NWF layer with oxidized PAN fibers coated with polyethylene-based thermoplastic resin), in the composite material according to the invention, due to the presence of a hydro-entangled NWF barrier layer, it is possible to reduce the basis weight of the layer containing the oxidized PAN fibers. In fact, the hydro-entangled NWF has a greater thickness than a thermoplastic resin sheet, and to achieve the thickness required by the application, it is possible to vary the combination of the thicknesses of the two layers.

The composite material component according to the present invention based on oxidized PAN fibers carbonizes when attacked by a flame, thus forming a kind of surface 'char' layer; the flame then encounters the NWF barrier layer, which surely melts at a higher temperature than polyethylene (whether PES, PP, PA, etc.). Thus, the composite material according to the invention has a higher fire resistance than a product made according to WO 2020/245735 A1.

The reduction of the oxidized PAN fiber-based layer is offset by the hydro-entangled NWF barrier layer, bringing a cost reduction advantage. The oxidized PAN fiber costs much more than the thermoplastic fibers normally used.

## Claims

1. Composite material (1) with molten polymer barrier effect and with flame-retardant properties, comprising:
- a first layer (10) of non-woven fabric comprising a percentage by weight of oxidized polyacrylonitrile fibres equal to or greater than 40% to confer flame-retardant properties to the composite material (1), the remaining percentage by weight consisting of other synthetic fibres, said first layer (10) having a weight between 200 g/m2 and 600 g/m2 and a thickness between 1.6 mm and 5 mm;
- a barrier layer (20), overlapping said first layer (10) and suitable to counteract the passage of molten polymers through said composite material (1),
**characterized in that** the oxidized polyacrylonitrile fibres of said first layer (10) have a count between 1.5 - 5 dtex, preferably between 1.7 and 2.5 dtex, and the other synthetic fibres of said first layer (10) have a count between 0.8 dtex and 5 dtex,
**and in that** the barrier layer (20) consists of a second layer of non-woven fabric of hydro-entangled synthetic and/or artificial fibres, said barrier layer (20) having:
- a basis weight between 70 g/m2 and 150 g/m2; - a thickness between 0.4 mm and 1.5 mm; and - a permeability to air between 200 L/m2s and 2000 L/m2s under a pressure drop of 2 mbar, measured in accordance with ISO 9237,
**wherein** the composite material (1) has a thickness between 2 mm and 6.5 mm, preferably 3 mm, and a basis weight between 270 g/m2 and 750 g/m2, preferably between 450 g/m2 and 600 g/m2, thickness being measured in accordance with ISO 9073 - 2 standard and basis weight being measured in accordance with ISO 9073 - 1 standard,
**wherein** the synthetic and/or artificial fibres of said barrier layer (20) are selected from the group consisting of polyethylene terephthalate (PET) fibres, polybutylene terephthalate (PBT) fibres, polyethylene naphthalate (PEN) fibres, polycyclohexylenedimethylene terephthalate (PCT) fibres, polytrimethylene terephthalate (PTT) fibres, polytrimethylene naphthalate (PTN) fibres, polypropylene fibres (PP), splittable fibres, viscose fibres (RY), preferably the synthetic fibres of said barrier layer (20) being polyethylene terephthalate (PET) fibres.

2. Composite material (1) according to claim 1, wherein the other synthetic fibres of said first layer (10) are selected from the group consisting of polyethylene terephthalate (PET) fibres, polybutylene terephthalate (PBT) fibres, polyethylene naphthalate (PEN) fibres, polycyclohexylenedimethylene terephthalate (PCT) fibres, polytrimethylene terephthalate (PTT) fibres, polytrimethylene naphthalate (PTN) fibres, polypropylene fibres (PP), preferably the other synthetic fibres of said first layer (10) being polyethylene terephthalate (PET) fibres.

3. Composite material (1) according to claim 1 or 2, wherein the synthetic and/or artificial fibres of said barrier layer (20) have a count between 0.8 dtex and 5 dtex.

4. Composite material (1) according to any one of the preceding claims, wherein the first layer (10) and the barrier layer (20) are solidarized with each other by means of a discontinuous interconnection between the respective contact surfaces (11, 21) of the two layers (10, 20).

5. Composite material (1) according to claim 4, wherein the discontinuous interconnection between the respective contact surfaces of the two layers is defined by islands (30) of binder resin acting as a bridge between the two layers (10, 20).

6. Composite material (1) according to claim 5, wherein said islands (30) of binder resin constitute 3% to 8% by weight on the total weight of the composite material (1).

7. Composite material (1) according to claim 5 or 6, wherein said binder resin can be co-polyester, polyolefin or epoxy.

8. Composite material (1) according to claim 2, wherein the other synthetic fibres of said first layer (10) further comprise bicomponent fibres, preferably the bicomponent fibres being present with a percentage by weight on the first layer (10) from 20% to 40%.

9. Composite material (1) according to any of the claims 1 to 3, wherein the synthetic and/or artificial fibres of said barrier layer (20) further comprise bicomponent fibres, preferably the bicomponent fibres being present with a percentage by weight on the barrier layer (20) from 20% to 40%.

10. Composite material (1) according to claim 4, wherein the discontinuous interconnection between the respective contact surfaces of the two layers is defined by bridge structures (40) between the fibres of the two layers consisting of thermobonded bicomponent fibres.

11. Method for making a composite material (1) with molten polymer barrier effect and with flame-retardant properties according to any one of the preceding claims, comprising the following operating steps:
a) producing the first layer (10) of non-woven fabric by carding and needling or hydro-entangling a mixture of other synthetic fibres with a count between 0.8 dtex and 5 dtex and oxidized polyacrylonitrile fibres with a count between 1.5 and 5 dtex, the oxidized polyacrylonitrile fibres constituting at least 40% by weight of the first layer (10), said first layer (10) having a basis weight between 200 g/m2 and 600 g/m2 and a thickness between 1.6 mm and 5 mm;
b) producing the barrier layer (20) in non-woven fabric by carding and hydro-entangling synthetic and/or artificial fibres, said barrier layer (20) having a basis weight between 70 g/m2 and 150 g/m2, a thickness between 0.4 mm and 1.5 mm and a permeability to air between 200 L/m2s and 2000 L/m2s under a pressure drop of 2 mbar, measured according to ISO 9237,
c) overlapping the first layer (10) and the barrier layer (20) on each other at respective contact surfaces, so as to obtain said composite material,
**wherein** the composite material (1) has a thickness between 2 mm and 6.5 mm, preferably 3 mm, and a basis weight between 270 g/m2 and 750 g/m2, preferably between 450 g/m2 and 600 g/m2, thickness being measured in accordance with ISO 9073 - 2 standard and basis weight being measured in accordance with ISO 9073 - 1 standard,
**wherein** the synthetic and/or artificial fibres of said barrier layer (20) are selected from the group consisting of polyethylene terephthalate (PET) fibres, polybutylene terephthalate (PBT) fibres, polyethylene naphthalate (PEN) fibres, polycyclohexylenedimethylene terephthalate (PCT) fibres, polytrimethylene terephthalate (PTT) fibres, polytrimethylene naphthalate (PTN) fibres, polypropylene fibres (PP), splittable fibres, viscose fibres (RY), preferably the synthetic fibres of said barrier layer (20) being polyethylene terephthalate (PET) fibres.

12. Method according to claim 11, wherein the other synthetic fibres of said first layer (10) are selected from the group consisting of polyethylene terephthalate (PET) fibres, polybutylene terephthalate (PBT) fibres, polyethylene naphthalate (PEN) fibres, polycyclohexylenedimethylene terephthalate (PCT) fibres, polytrimethylene terephthalate (PTT) fibres, polytrimethylene naphthalate (PTN) fibres, polypropylene (PP) fibres, preferably the synthetic fibres of said first layer (10) being polyethylene terephthalate (PET) fibres.

13. Method according to claim 11 or 12, wherein the synthetic and/or artificial fibres of said barrier layer (20) have a count between 0.8 dtex and 5 dtex.

14. Method according to any one of claims 11 to 13, comprising a step d) of solidarizing the first layer (10) and the barrier layer (20) together so as to make a discontinuous interconnection between the respective contact surfaces of the two layers (10, 20).

15. Method according to claim 14, wherein the discontinuous interconnection between the respective contact surfaces of the two layers is defined by islands (30) of binder resin acting as a bridge between the two layers (10, 20).

16. Method according to claim 15, wherein said solidarizing step d) comprises the following sub-steps conducted prior to the overlapping step c):
d1) depositing binder resin powder on the contact surface (11) of the first layer (10) and/or on the contact surface (21) of the barrier layer (20);
d2) thermally activating the binder resin powder deposited on the contact surface by applying heat;
wherein said solidarizing step d) further comprises the following sub-step conducted after the overlapping step c) :
d3) pressing the two overlapped layers (10; 20) together, preferably without heating by means of calendering cylinders, so as to compress the binder resin powder between the two contact surfaces and thus create said islands (30) of binder resin acting as a bridge between the two layers (10, 20).

17. Method according to claim 15 or 16, wherein said binder resin constitutes from 3% to 8% by weight on the total weight of the composite material (1).

18. Method according to claim 15, 16 or 17, wherein said binder resin can be co-polyester, polyolefin or epoxy.

19. Method according to claim 12, wherein the other synthetic fibres of said first layer (10) further comprise bicomponent fibres, preferably the bicomponent fibres being present with a percentage by weight on the first layer (10) from 20% to 40%.

20. Method according to any of the claims 11 to 13, wherein the synthetic and /or artificial fibres of said barrier layer (20) further comprise bicomponent fibres, preferably the bicomponent fibres being present with a percentage by weight on the barrier layer (20) from 20% to 40%.

21. Method according to claim 14, wherein the discontinuous interconnection between the respective contact surfaces of the two layers (10; 20) is defined by bridge structures (40) between the fibres of the two layers consisting of thermobonded bicomponent fibres.

22. Method according to claim 21, wherein said solidarizing step d) comprises thermobinding the two layers (10; 20) overlapped on each other by the application of heat so as to partially melt the bicomponent fibres and thus create bridge structures (40) between the fibres of the two layers.

## Patentansprüche

1. Verbundwerkstoff (1) mit Schmelzpolymer-Sperrwirkung und mit flammhemmenden Eigenschaften, umfassend:
- eine erste Schicht (10) aus Vliesstoff, die einen Gewichtsanteil an oxidierten Polyacrylnitrilfasern von 40 % oder mehr aufweist, um dem Verbundwerkstoff (1) flammhemmende Eigenschaften zu verleihen, wobei der verbleibende Gewichtsanteil aus anderen synthetischen Fasern besteht, wobei die erste Schicht (10) ein Gewicht zwischen 200 g/m2 und 600 g/m2 und eine Dicke zwischen 1,6 mm und 5 mm aufweist;
- eine Sperrschicht (20), die die erste Schicht (10) überlagert und geeignet ist, dem Durchgang von Schmelzpolymeren durch den Verbundwerkstoff (1) entgegenzuwirken,
**dadurch gekennzeichnet, dass** die oxidierten Polyacrylnitrilfasern der ersten Schicht (10) einen Titer zwischen 1,5-5 dtex, vorzugsweise zwischen 1,7 und 2,5 dtex, aufweisen und die anderen synthetischen Fasern der ersten Schicht (10) einen Titer zwischen 0,8 dtex und 5 dtex aufweisen,
**und dadurch, dass** die Sperrschicht (20) aus einer zweiten Schicht aus Vliesstoff aus wasserstrahlverfestigten synthetischen und/oder künstlichen Fasern besteht, wobei die Sperrschicht (20) aufweist:
- ein Flächengewicht zwischen 70 g/m2 und 150 g/m2; - eine Dicke zwischen 0,4 mm und 1,5 mm; und - eine Luftdurchlässigkeit zwischen 200 1/m2s und 2000 1/m2s unter einem Druckabfall von 2 mbar, gemessen gemäß ISO 9237,
**wobei** der Verbundwerkstoff (1) eine Dicke zwischen 2 mm und 6,5 mm, vorzugsweise 3 mm, und ein Flächengewicht zwischen 270 g/m2 und 750 g/m2, vorzugsweise zwischen 450 g/m2 und 600 g/m2, aufweist, wobei die Dicke gemäß der Norm ISO 9073-2 und das Flächengewicht gemäß der Norm ISO 9073-1 gemessen wird,
**wobei** die synthetischen und/oder künstlichen Fasern der Sperrschicht (20) ausgewählt sind aus der Gruppe, bestehend aus Polyethylenterephthalat (PET)-Fasern, Polybutylenterephthalat (PBT)-Fasern, Polyethylennaphthalat (PEN)-Fasern, Polycyclohexylendimethylenterephthalat (PCT)-Fasern, Polytrimethylenterephthalat (PTT)-Fasern, Polytrimethylennaphthalat (PTN)-Fasern, Polypropylenfasern (PP), spaltbaren Fasern, Viskosefasern (RY), wobei die synthetischen Fasern der Sperrschicht (20) vorzugsweise Polyethylenterephthalat (PET)-Fasern sind.

2. Verbundwerkstoff (1) nach Anspruch 1, wobei die anderen synthetischen Fasern der ersten Schicht (10) ausgewählt sind aus der Gruppe, bestehend aus Polyethylenterephthalat (PET)-Fasern, Polybutylenterephthalat (PBT)-Fasern, Polyethylennaphthalat (PEN)-Fasern, Polycyclohexylendimethylenterephthalat (PCT)-Fasern, Polytrimethylenterephthalat (PTT)-Fasern, Polytrimethylennaphthalat (PTN)-Fasern, Polypropylenfasern (PP), wobei die anderen synthetischen Fasern der ersten Schicht (10) vorzugsweise Polyethylenterephthalat (PET)-Fasern sind.

3. Verbundwerkstoff (1) nach Anspruch 1 oder 2, wobei die synthetischen und/oder künstlichen Fasern der Sperrschicht (20) einen Titer zwischen 0,8 dtex und 5 dtex aufweisen.

4. Verbundwerkstoff (1) nach einem der vorhergehenden Ansprüche, wobei die erste Schicht (10) und die Sperrschicht (20) durch eine diskontinuierliche Verbindung zwischen den jeweiligen Kontaktflächen (11, 21) der beiden Schichten (10, 20) fest miteinander verbunden sind.

5. Verbundwerkstoff (1) nach Anspruch 4, wobei die diskontinuierliche Verbindung zwischen den jeweiligen Kontaktflächen der beiden Schichten durch Inseln (30) aus Bindemittelharz definiert ist, die als Brücke zwischen den beiden Schichten (10, 20) fungieren.

6. Verbundwerkstoff (1) nach Anspruch 5, wobei die Inseln (30) aus Bindemittelharz 3 Gew.-% bis 8 Gew.-% des Gesamtgewichts des Verbundwerkstoffs (1) ausmachen.

7. Verbundwerkstoff (1) nach Anspruch 5 oder 6, wobei das Bindemittelharz Copolyester, Polyolefin oder Epoxid sein kann.

8. Verbundwerkstoff (1) nach Anspruch 2, wobei die anderen synthetischen Fasern der ersten Schicht (10) ferner Bikomponentenfasern umfassen, wobei die Bikomponentenfasern vorzugsweise mit einem Gewichtsanteil an der ersten Schicht (10) von 20 % bis 40 % vorhanden sind.

9. Verbundwerkstoff (1) nach einem der Ansprüche 1 bis 3, wobei die synthetischen und/oder künstlichen Fasern der Sperrschicht (20) ferner Bikomponentenfasern umfassen, wobei die Bikomponentenfasern vorzugsweise mit einem Gewichtsanteil an der Sperrschicht (20) von 20 % bis 40 % vorhanden sind.

10. Verbundwerkstoff (1) nach Anspruch 4, wobei die diskontinuierliche Verbindung zwischen den jeweiligen Kontaktflächen der beiden Schichten durch Brückenstrukturen (40) zwischen den Fasern der zwei Schichten definiert ist, die aus thermogebundenen Bikomponentenfasern bestehen.

11. Verfahren zur Herstellung eines Verbundwerkstoffs (1) mit Schmelzpolymer-Sperrwirkung und mit flammhemmenden Eigenschaften nach einem der vorhergehenden Ansprüche, umfassend die folgenden Arbeitsschritte:
a) Herstellen der ersten Schicht (10) aus Vliesstoff durch Kardieren und Nadeln oder Wasserstrahlverfestigen einer Mischung aus anderen synthetischen Fasern mit einem Titer zwischen 0,8 dtex und 5 dtex und oxidierten Polyacrylnitrilfasern mit einem Titer zwischen 1,5 und 5 dtex, wobei die oxidierten Polyacrylnitrilfasern mindestens 40 Gew.-% der ersten Schicht (10) ausmachen, wobei die erste Schicht (10) ein Flächengewicht zwischen 200 g/m2 und 600 g/m2 und eine Dicke zwischen 1,6 mm und 5 mm aufweist;
b) Herstellen der Sperrschicht (20) aus Vliesstoff durch Kardieren und Wasserstrahlverfestigen von synthetischen und/oder künstlichen Fasern, wobei die Sperrschicht (20) ein Flächengewicht zwischen 70 g/m2 und 150 g/m2, eine Dicke zwischen 0,4 mm und 1,5 mm und eine Luftdurchlässigkeit zwischen 200 1/m2s und 2000 1/m2s unter einem Druckabfall von 2 mbar, gemessen gemäß ISO 9237, aufweist,
c) Übereinanderlegen der ersten Schicht (10) und der Sperrschicht (20) an jeweiligen Kontaktflächen, um den Verbundwerkstoff zu erhalten,
**wobei** der Verbundwerkstoff (1) eine Dicke zwischen 2 mm und 6,5 mm, vorzugsweise 3 mm, und ein Flächengewicht zwischen 270 g/m2 und 750 g/m2, vorzugsweise zwischen 450 g/m2 und 600 g/m2, aufweist, wobei die Dicke gemäß der Norm ISO 9073-2 und das Flächengewicht gemäß der Norm ISO 9073-1 gemessen wird,
**wobei** die synthetischen und/oder künstlichen Fasern der Sperrschicht (20) ausgewählt sind aus der Gruppe, bestehend aus Polyethylenterephthalat (PET)-Fasern, Polybutylenterephthalat (PBT)-Fasern, Polyethylennaphthalat (PEN)-Fasern, Polycyclohexylendimethylenterephthalat (PCT)-Fasern, Polytrimethylenterephthalat (PTT)-Fasern, Polytrimethylennaphthalat (PTN)-Fasern, Polypropylenfasern (PP), spaltbaren Fasern, Viskosefasern (RY), wobei die synthetischen Fasern der Sperrschicht (20) vorzugsweise Polyethylenterephthalat (PET)-Fasern sind.

12. Verfahren nach Anspruch 11, wobei die anderen synthetischen Fasern der ersten Schicht (10) ausgewählt sind aus der Gruppe, bestehend aus Polyethylenterephthalat (PET)-Fasern, Polybutylenterephthalat (PBT)-Fasern, Polyethylennaphthalat (PEN)-Fasern, Polycyclohexylendimethylenterephthalat (PCT)-Fasern, Polytrimethylenterephthalat (PTT)-Fasern, Polytrimethylennaphthalat (PTN)-Fasern, Polypropylen (PP)-Fasern, wobei die synthetischen Fasern der ersten Schicht (10) vorzugsweise Polyethylenterephthalat (PET)-Fasern sind.

13. Verfahren nach Anspruch 11 oder 12, wobei die synthetischen und/oder künstlichen Fasern der Sperrschicht (20) einen Titer zwischen 0,8 dtex und 5 dtex aufweisen.

14. Verfahren nach einem der Ansprüche 11 bis 13, umfassend einen Schritt d) des festen Verbindens der ersten Schicht (10) und der Sperrschicht (20) miteinander, um eine diskontinuierliche Verbindung zwischen den jeweiligen Kontaktflächen der beiden Schichten (10, 20) herzustellen.

15. Verfahren nach Anspruch 14, wobei die diskontinuierliche Verbindung zwischen den jeweiligen Kontaktflächen der beiden Schichten durch Inseln (30) aus Bindemittelharz definiert ist, die als Brücke zwischen den beiden Schichten (10, 20) fungieren.

16. Verfahren nach Anspruch 15, wobei der Schritt d) des festen Verbindens die folgenden Teilschritte umfasst, die vor dem Schritt c) des Übereinanderlegens durchgeführt werden:
d1) Aufbringen von Bindemittelharzpulver auf die Kontaktfläche (11) der ersten Schicht (10) und/oder auf die Kontaktfläche (21) der Sperrschicht (20);
d2) thermisches Aktivieren des auf die Kontaktfläche aufgebrachten Bindemittelharzpulvers durch Anwendung von Wärme;
wobei der Schritt d) des festen Verbindens ferner den folgenden Teilschritt umfasst, der nach dem Schritt c) des Übereinanderlegens durchgeführt wird:
d3) Zusammenpressen der beiden übereinanderliegenden Schichten (10; 20), vorzugsweise ohne Erwärmung mittels Kalanderwalzen, um das Bindemittelharzpulver zwischen den beiden Kontaktflächen zu komprimieren und so die Inseln (30) aus Bindemittelharz zu erzeugen, die als Brücke zwischen den beiden Schichten (10, 20) fungieren.

17. Verfahren nach Anspruch 15 oder 16, wobei das Bindemittelharz 3 Gew.- % bis 8 Gew.- % des Gesamtgewichts des Verbundwerkstoffs (1) ausmacht.

18. Verfahren nach Anspruch 15, 16 oder 17, wobei das Bindemittelharz Copolyester, Polyolefin oder Epoxid sein kann.

19. Verfahren nach Anspruch 12, wobei die anderen synthetischen Fasern der ersten Schicht (10) ferner Bikomponentenfasern umfassen, wobei die Bikomponentenfasern vorzugsweise mit einem Gewichtsanteil an der ersten Schicht (10) von 20 % bis 40 % vorhanden sind.

20. Verfahren nach einem der Ansprüche 11 bis 13, wobei die synthetischen und/oder künstlichen Fasern der Sperrschicht (20) ferner Bikomponentenfasern umfassen, wobei die Bikomponentenfasern vorzugsweise mit einem Gewichtsanteil an der Sperrschicht (20) von 20 % bis 40 % vorhanden sind.

21. Verfahren nach Anspruch 14, wobei die diskontinuierliche Verbindung zwischen den jeweiligen Kontaktflächen der beiden Schichten (10; 20) durch Brückenstrukturen (40) zwischen den Fasern der zwei Schichten definiert ist, die aus thermogebundenen Bikomponentenfasern bestehen.

22. Verfahren nach Anspruch 21, wobei der Schritt d) des festen Verbindens das Thermobinden der beiden übereinanderliegenden Schichten (10; 20) durch Anwendung von Wärme umfasst, um die Bikomponentenfasern teilweise zu schmelzen und so Brückenstrukturen (40) zwischen den Fasern der zwei Schichten zu erzeugen.

## Revendications

1. Matériau composite (1) à effet barrière polymère fondu et aux propriétés ignifuges, comprenant :
- une première couche (10) de tissu non tissé comprenant un pourcentage en poids de fibres de polyacrylonitrile oxydé égal ou supérieur à 40 % pour conférer des propriétés ignifuges au matériau composite (1), le pourcentage restant en poids étant constitué d'autres fibres synthétiques, ladite première couche (10) ayant un poids compris entre 200 g/m2 et 600 g/m2 et une épaisseur comprise entre 1,6 mm et 5 mm ;
- une couche barrière (20), chevauchant ladite première couche (10) et adaptée pour contrer le passage de polymères fondus à travers ledit matériau composite (1),
**caractérisé en ce que** les fibres de polyacrylonitrile oxydé de ladite première couche (10) ont un titre compris entre 1,5 et 5 dtex, de préférence entre 1,7 et 2,5 dtex, et les autres fibres synthétiques de ladite première couche (10) ont un titre compris entre 0,8 dtex et 5 dtex,
et **en ce que** la couche barrière (20) est constituée d'une deuxième couche de tissu non-tissé de fibres synthétiques et/ou artificielles hydro-enchevêtrées, ladite couche barrière (20) présentant :
- un grammage compris entre 70 g/m2 et 150 g/m2 ; - une épaisseur comprise entre 0,4 mm et 1,5 mm ; et - une perméabilité à l'air comprise entre 200 L/m2s et 2000 L/m2s sous une perte de charge de 2 mbar, mesurée selon la norme ISO 9237,
**dans lequel** le matériau composite (1) a une épaisseur comprise entre 2 mm et 6,5 mm, de préférence 3 mm, et un grammage compris entre 270 g/m2 et 750 g/m2, de préférence entre 450 g/m2 et 600 g/m2, l'épaisseur étant mesurée conformément à la norme ISO 9073-2 et le grammage étant mesuré conformément à la norme ISO 9073-1,
**dans lequel** les fibres synthétiques et/ou artificielles de ladite couche barrière (20) sont choisies dans le groupe constitué par les fibres de polyéthylène téréphtalate (en Anglais « polyethylene terephthalate » pour PET), les fibres de polybutylène téréphtalate (en Anglais « polybutylene terephthalate » pour PBT), les fibres de polyéthylène naphtalate (en Anglais « polyethylene naphthalate » pour PEN), les fibres de polycyclohexylènediméthylène téréphtalate (en Anglais « polycyclohexylenedimethylene terephthalate » pour PCT), les fibres de polytriméthylène téréphtalate (en Anglais « polytrimethylene terephthalate » pour PTT), les fibres de polytriméthylène naphtalate (en Anglais « polytrimethylene naphthalate » pour PTN), les fibres de polypropylène (en Anglais « polypropylene fibres » pour PP), les fibres séparables, les fibres de viscose (en Anglais « viscose fibres » pour RY), de préférence les fibres synthétiques de ladite couche barrière (20) étant des fibres de polyéthylène téréphtalate (PET).

2. Matériau composite (1) selon la revendication 1, dans lequel les autres fibres synthétiques de ladite première couche (10) sont choisies dans le groupe constitué par les fibres de polyéthylène téréphtalate (PET), les fibres de polybutylène téréphtalate (PBT), les fibres de polyéthylène naphtalate (PEN), les fibres de polycyclohexylènediméthylène téréphtalate (PCT), les fibres de polytriméthylène téréphtalate (PTT), les fibres de polytriméthylène naphtalate (PTN), les fibres de polypropylène (PP), de préférence les autres fibres synthétiques de ladite première couche (10) étant des fibres de polyéthylène téréphtalate (PET).

3. Matériau composite (1) selon la revendication 1 ou 2, dans lequel les fibres synthétiques et/ou artificielles de ladite couche barrière (20) ont un titre compris entre 0,8 dtex et 5 dtex.

4. Matériau composite (1) selon l'une quelconque des revendications précédentes, dans lequel la première couche (10) et la couche barrière (20) sont solidarisées l'une à l'autre au moyen d'une interconnexion discontinue entre les surfaces de contact respectives (11, 21) des deux couches (10, 20).

5. Matériau composite (1) selon la revendication 4, dans lequel l'interconnexion discontinue entre les surfaces de contact respectives des deux couches est définie par des îlots (30) de résine liante agissant comme un pont entre les deux couches (10, 20).

6. Matériau composite (1) selon la revendication 5, dans lequel lesdits îlots (30) de résine liante constituent 3 % à 8 % en poids du poids total du matériau composite (1).

7. Matériau composite (1) selon la revendication 5 ou 6, dans lequel ladite résine liante peut être un co-polyester, une polyoléfine ou un époxy.

8. Matériau composite (1) selon la revendication 2, dans lequel les autres fibres synthétiques de ladite première couche (10) comprennent en outre des fibres à deux composants, de préférence les fibres à deux composants étant présentes avec un pourcentage en poids sur la première couche (10) de 20 % à 40 %.

9. Matériau composite (1) selon l'une quelconque des revendications 1 à 3, dans lequel les fibres synthétiques et/ou artificielles de ladite couche barrière (20) comprennent en outre des fibres à deux composants, de préférence les fibres à deux composants étant présentes avec un pourcentage en poids sur la couche barrière (20) de 20 % à 40 %.

10. Matériau composite (1) selon la revendication 4, dans lequel l'interconnexion discontinue entre les surfaces de contact respectives des deux couches est définie par des structures de pont (40) entre les fibres des deux couches constituées de fibres à deux composants thermosoudées.

11. Procédé de fabrication d'un matériau composite (1) à effet barrière polymère fondu et à propriétés ignifuges selon l'une quelconque des revendications précédentes, comprenant les étapes opératoires suivantes :
a) produire la première couche (10) de tissu non tissé par cardage et aiguilletage ou hydro-enchevêtrement d'un mélange d'autres fibres synthétiques d'un titre compris entre 0,8 dtex et 5 dtex et de fibres de polyacrylonitrile oxydé d'un titre compris entre 1,5 et 5 dtex, les fibres de polyacrylonitrile oxydé constituant au moins 40 % en poids de la première couche (10), ladite première couche (10) ayant un grammage compris entre 200 g/m2 et 600 g/m2 et une épaisseur comprise entre 1,6 mm et 5 mm ;
b) réaliser la couche barrière (20) en tissu non-tissé par cardage et hydro-enchevêtrement de fibres synthétiques et/ou artificielles, ladite couche barrière (20) ayant un grammage compris entre 70 g/m2 et 150 g/m2, une épaisseur comprise entre 0,4 mm et 1,5 mm et une perméabilité à l'air comprise entre 200 L/m2s et 2000 L/m2s sous une perte de charge de 2 mbar, mesurée selon la norme ISO 9237,
c) chevaucher la première couche (10) et la couche barrière (20) l'une sur l'autre au niveau des surfaces de contact respectives, de manière à obtenir ledit matériau composite,
**dans lequel** le matériau composite (1) a une épaisseur comprise entre 2 mm et 6,5 mm, de préférence 3 mm, et un grammage compris entre 270 g/m2 et 750 g/m2, de préférence entre 450 g/m2 et 600 g/m2, l'épaisseur étant mesurée conformément à la norme ISO 9073-2 et le grammage étant mesuré conformément à la norme ISO 9073-1,
**dans lequel** les fibres synthétiques et/ou artificielles de ladite couche barrière (20) sont choisies dans le groupe constitué par les fibres de polyéthylène téréphtalate (PET), les fibres de polybutylène téréphtalate (PBT), les fibres de polyéthylène naphtalate (PEN), les fibres de polycyclohexylènediméthylène téréphtalate (PCT), les fibres de polytriméthylène téréphtalate (PTT), les fibres de polytriméthylène naphtalate (PTN), les fibres de polypropylène (PP), les fibres séparables, les fibres de viscose (RY), de préférence les fibres synthétiques de ladite couche barrière (20) étant des fibres de polyéthylène téréphtalate (PET).

12. Procédé selon la revendication 11, dans lequel les autres fibres synthétiques de ladite première couche (10) sont choisies dans le groupe constitué par les fibres de polyéthylène téréphtalate (PET), les fibres de polybutylène téréphtalate (PBT), les fibres de polyéthylène naphtalate (PEN), les fibres de polycyclohexylènediméthylène téréphtalate (PCT), les fibres de polytriméthylène téréphtalate (PTT), les fibres de polytriméthylène naphtalate (PTN), les fibres de polypropylène (PP), de préférence les fibres synthétiques de ladite première couche (10) étant des fibres de polyéthylène téréphtalate (PET).

13. Procédé selon la revendication 11 ou 12, dans lequel les fibres synthétiques et/ou artificielles de ladite couche barrière (20) ont un titre compris entre 0,8 dtex et 5 dtex.

14. Procédé selon l'une quelconque des revendications 11 à 13, comprenant une étape d) de solidarisation de la première couche (10) et de la couche barrière (20) ensemble de manière à réaliser une interconnexion discontinue entre les surfaces de contact respectives des deux couches (10, 20).

15. Procédé selon la revendication 14, dans lequel l'interconnexion discontinue entre les surfaces de contact respectives des deux couches est définie par des îlots (30) de résine liante agissant comme un pont entre les deux couches (10, 20).

16. Procédé selon la revendication 15, dans lequel ladite étape d) de solidarisation comprend les sous-étapes suivantes effectuées avant l'étape c) de chevauchement :
d1) déposer de la poudre de résine liante sur la surface de contact (11) de la première couche (10) et/ou sur la surface de contact (21) de la couche barrière (20) ;
d2) activer thermiquement la poudre de résine liante déposée sur la surface de contact en appliquant de la chaleur ;
dans lequel ladite étape d) de solidarisation comprend en outre la sous-étape suivante effectuée après l'étape c) de chevauchement :
d3) presser les deux couches superposées (10 ; 20) l'une contre l'autre, de préférence sans chauffage au moyen de cylindres de calandrage de manière à comprimer la poudre de résine liante entre les deux surfaces de contact et à créer ainsi lesdits îlots (30) de résine liante agissant comme un pont entre les deux couches (10, 20).

17. Procédé selon la revendication 15 ou 16, dans lequel ladite résine liante constitue de 3 % à 8 % en poids du poids total du matériau composite (1).

18. Procédé selon la revendication 15, 16 ou 17, dans lequel ladite résine liante peut être un co-polyester, une polyoléfine ou un époxy.

19. Procédé selon la revendication 12, dans lequel les autres fibres synthétiques de ladite première couche (10) comprennent en outre des fibres à deux composants, de préférence les fibres à deux composants étant présentes avec un pourcentage en poids sur la première couche (10) de 20 % à 40 %.

20. Procédé selon l'une quelconque des revendications 11 à 13, dans lequel les fibres synthétiques et /ou artificielles de ladite couche barrière (20) comprennent en outre des fibres bicomposées, de préférence les fibres bicomposées étant présentes avec un pourcentage en poids sur la couche barrière (20) de 20 % à 40 %.

21. Procédé selon la revendication 14, dans lequel l'interconnexion discontinue entre les surfaces de contact respectives des deux couches (10 ; 20) est définie par des structures de pont (40) entre les fibres des deux couches constituées de fibres à deux composants thermosoudées.

22. Procédé selon la revendication 21, dans lequel ladite étape de solidarisation d) comprend le thermocollage des deux couches (10 ; 20) chevauchées l'une sur l'autre par l'application de chaleur de manière à faire fondre partiellement les fibres bicomposantes et à créer ainsi des structures de pontage (40) entre les fibres des deux couches.
